# EUROPÄISCHE PATENTSCHRIFT

(11) **EP 2 169 245 B1**
(45) Veröffentlichungstag und Bekanntmachung des Hinweises auf die Patenterteilung: **18.04.2012**
(21) Anmeldenummer: 08017238.0
(22) Anmeldetag: 30.09.2008
(51) Int. Cl.: F16D 3/04, F16D 3/72

(54) **Wellenkupplung**
Shaft coupling
Accouplement d'arbre

(43) Veröffentlichungstag der Anmeldung: 31.03.2010
(73) Patentinhaber: Siemens Aktiengesellschaft, 80333 München (DE)
(72) Erfinder: Braun, Matthias, 97711 Weichtungen (DE); Zisler, Michael, 97717 Euerdorf-Wirmsthal (DE)

(56) Entgegenhaltungen:
- DE-A1- 2 232 723
- DE-C- 913 117
- JP-A- 4 194 417
- US-A- 1 702 407

## Beschreibung

Die Erfindung betrifft eine Wellenkupplung zur Ankopplung eines Gebers, der eine Geberwelle aufweist, an eine elektrische Maschine, insbesondere einen Elektromotor, die eine Maschinenwelle aufweist.

Beim Einsatz von elektrischen Maschinen mit rotierenden Wellen ist es oft erwünscht eine Drehzahl einer Welle oder eine Lage eines Rotors zu erfassen. In der Regel sind Motoren daher mit einem Winkelmesssystem ausgestattet. Mit diesem Winkelmesssystem kann ein Umrichter eine Winkellage eines Motorläufers zum Motorständer bestimmen und/oder einen Drehzahlistwert für eine Drehzahlregelung ermitteln.

Die mechanische Kopplung eines Winkelgebers an den Motor erfolgt z.B. mit einer Wellenkupplung oder einer Drehmomentstütze. Diese Kupplungen müssen auf der einen Seite möglichst drehsteif sein, d.h. eine hohes Torsionsmoment aufweisen, auf der anderen Seite jedoch möglichst geringe Querkräfte weitergeben, da ansonsten die Lager der Maschinenwelle und insbesondere die Lager der Geberwelle belastet werden und es dort zu einem Verschleiß kommt.

Querkräfte auf den Lagern werden z.B. durch mechanischen Versatz der zu kuppelnden Achsen erzeugt. Hierbei wird zwischen Radialversatz und Winkelversatz unterschieden.

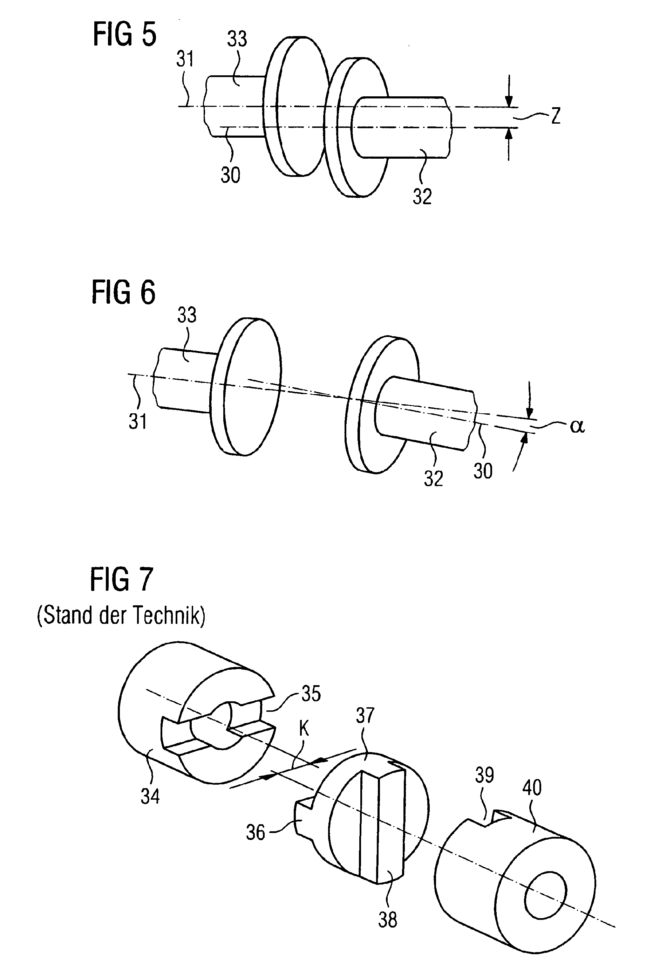

Aus der EP 1 452 759 A1 ist eine Wellenkupplung bekannt, die eine Maschinenwelle mit einer Geberwelle verbindet. Der offenbarten Wellenkupplung liegt das Prinzip der Oldham-Kupplung (Kreuzschieberkupplung) zugrunde. FIG 6 illustriert den schematischen Aufbau einer Oldham-Kupplung. Bei der Oldham-Kupplung wird ein Radialversatz der Wellen durch Gleitbewegung des Drehmomentübertragungselements kompensiert und somit werden die Querkräfte minimiert.

Bei der EP 1 452 759 A1 wird die Geberwelle über ein Drehmomentübertragungselement mit der Maschinenwelle verbunden. Hierbei weist die Passung des Drehmomentübertragungselements zum Geberwellenendstück und dem Maschinenwellenendstück ein Spiel auf, so dass die Klauen des Geberwellenendstücks und des Maschinenwellenendstücks im Drehmomentübertragungselement gleiten können. Liegt nun ein radialer Versatz der Achsen vor, so werden durch Gleitbewegung des Drehmomentübertragungselements die Querkräfte auf die Lager kompensiert und somit minimiert.

Aus der JP 04-194417 A ist eine Wellenkupplung zur Ankopplung eines Gebers an eine elektrische Maschine bekannt. Hierbei wird die Geberwelle mittels eines Drehmomentübertragungselements mit der Maschinenwelle gekoppelt. Die Besonderheit des Drehmomentübertragungselements besteht hierbei darin, dass es die Funktion eines Drehmomentbegrenzers ausübt, so dass ein zu übertragendes Drehmoment begrenzt werden kann.

Der Erfindung liegt die Aufgabe zugrunde eine Wellenkupplung zu schaffen, die drehsteif ist und die Lager der zu kuppelnden Wellen möglichst wenig belastet.

Die Lösung der gestellten Aufgabe gelingt durch eine Wellenkupplung zur Ankopplung eines Gebers, der eine Geberwelle aufweist, an eine elektrische Maschine, die eine Maschinenwelle aufweist, wobei die Wellenkupplung umfasst:
- ein mit der Geberwelle koppelbares Geberwellenendstück,
- ein mit der Maschinenwelle koppelbares Maschinenwellenendstück und
- ein Drehmomentübertragungselement,
wobei zur Kopplung der Geberwelle mit der Maschinenwelle das Geberwellenendstück gegenüberliegend zum Maschinenwellenendstück angeordnet ist und das Drehmomentübertragungselement zwischen dem Geberwellenendstück und dem Maschinenwellenendstück angeordnet ist, wobei das Drehmomentübertra.gungselement mit dem Geberwellenendstück und dem Maschinenwellenendstück spielfrei koppelbar ist und eine derartige Steifigkeit aufweist, dass durch einen radialen Versatz und/oder Winkelversatz der Maschinenwelle und/oder Geberwelle hervorgerufene Querkräfte und/oder Biegemomente durch Deformation des Drehmomentübertragungselements im Vergleich zu einer starren Kupplungsanordnung reduziert werden.

Ferner wird die Aufgabe gelöst durch ein Herstellungsverfahren zur Ankopplung eines Gebers, der eine Geberwelle aufweist, an eine elektrische Maschine, die eine Maschinenwelle aufweist, mit folgenden Verfahrensschritten:
- Kopplung eines Geberwellenendstückes mit der Geberwelle,
- Kopplung eines Maschinenwellenendstückes mit der Maschinenwelle,
- spielfreies Koppeln des Geberwellenendstückes und des Maschinenwellenendstückes mit einem Drehmomentübertragungselement, welches eine derartige Steifigkeit aufweist, dass durch einen radialen Versatz und/oder Winkelversatz der Maschinenwelle und/oder Geberwellen hervorgerufene Querkräfte und/oder Biegemomente durch Deformation des Drehmomentübertragungselements im Vergleich zu einer starren Kupplungsanordnung reduziert werden.

Weitere vorteilhafte Ausführungsformen ergeben sich aus den Unteransprüchen.

Durch die spielfreie Koppelung des Geberwellenendstückes und des Maschinenwellenendstückes mit dem Drehmomentübertragungselement kann das Torsionsmoment der Maschinenwelle zeitnah und genau an die Geberwelle und somit an den Geber weitergegeben werden. Auf diese Weise können auch kleine Änderungen der Maschinenwelle übertragen werden und ein vorteilhafter Abgleich hinsichtlich der Winkellage des Motorläufers bzw. des Drehzahlistwerts für die Drehzahlregelung stattfinden.

Sofern es zu einem radialen Versatz und/oder Winkelversatz zwischen der Geberwelle und der Maschinenwelle kommt, so wird die daraus resultierende Querkraft, die sich bei den Lager der Geberwelle bzw. bei den Lager der Maschinenwelle niederschlagen würde, durch Deformation der Struktur des Drehmomentübertragungselements ausgeglichen. Die Deformation am Drehmomentübertragungselement findet vorteilhafterweise im elastischen Bereich des Materials des Drehmomentübertragungselements statt. Auf diese Weise werden die Lager der Maschinenwelle und insbesondere die Lager der Geberwelle entlastet bzw. geschont. Hierdurch wird eine enorme Verlängerung der Lebensdauer der üblicherweise verschleißanfälligen Lager erreicht.

Im Vergleich zu einer Oldham-Kupplung finden durch die spielfreie Koppelung des Drehmomentübertragungselements mit dem Maschinenwellenendstück und dem Geberwellenendstück kein Verschleiß durch ein ständiges hin und her gleiten des Drehmomentübertragungselements und die daraus resultierende Abreibung am Drehmomentübertragungselement sowie an dem Geberwellenendstück und dem Maschinenwellenendstück statt. Hierdurch wird eine enorme Verlängerung der Lebensdauer der Wellenkupplung und der Lager der Wellen erreicht.

Ein Winkelversatz der Maschinenwelle zur Geberwelle wird im Vergleich zu der Oldham-Kupplung, bei der hierdurch eine Querkraft an den Lagern der Maschinenwelle bzw. Geberwelle und somit ein Verschleiß dieser Partien hervorgerufen wird, durch Verformung des Drehmomentübertragungselements kompensiert. Auf diese Weise werden die Belastungen der Lager der Maschinenwelle bzw. Geberwelle reduziert und somit eine Verlängerung dieser anfälligen Komponenten erreicht.

In einer Ausführungsform der Erfindung ist das Drehmomentübertragungselement als Biegeteile, insbesondere Stanzbiegeteil, ausgebildet.

Durch die Realisierung des Drehmomentübertragungselements als Stanzbiegeteil kann eine einfache und kostengünstige Herstellung erzielt werden. Zudem wird durch die geometrische Form eines Stanzbiegeteils das Vorliegen eines Winkelversatzes bzw. Radialversatzes optimal durch vorzugsweise elastische Deformation des Drehmomentübertragungselements kompensiert und somit ein Erzeugen von Querkräften an den Lagern der Maschinenwelle bzw. Geberwelle verhindert.

In einer weiteren Ausführungsform der Erfindung ist das Drehmomentübertragungselement aus einem elastischen Kunststoff ausgebildet.

Hierbei kann die Steifigkeit des Drehmomentübertragungselements durch die Steifigkeit bzw. die Elastizität des Kunststoffmaterials optimal auf die Erfordernisse des Drehmomentübertragungselements eingestellt werden. Zudem kann eine kostengünstige Fertigung als Spritzgussteil realisiert werden.

In einer weiteren Ausführungsform der Erfindung ist das Drehmomentübertragungselement vorzugsweise einstückig ausgeführt. Auf diese Weise kann eine einfache Fertigung des Drehmomentübertragungselements erfolgen.

In einer weiteren Ausführungsform der Erfindung weist das Drehmomentübertragungselement an den Stirnseiten, deren Flächennormalen im Wesentlichen parallel zur Achse der Geberwelle und/oder Maschinenwelle gerichtet sind, wenn das Drehmomentübertragungselement mit den besagten Wellen gekoppelt ist, jeweils eine durch seinen Mittelpunkt verlaufende Quernut auf, wobei das Maschinenwellenendstück und das Geberwellenendstück, jeweils mindestens ein klauenartiges Element aufweisen, so dass im zusammengebauten Zustand das Drehmomentübertragungselement mit dem Maschinenwellenendstück und dem Geberwellenendstück, spielfrei ineinandergreifen und somit eine Drehmomentübertragung von der Maschinenwelle an die Geberwelle stattfindet.

Vorzugsweise ist die Nut im Drehmomentübertragungselement für die Klaue des Geberwellenendstücks senkrecht zur an der anderen Stirnseite liegenden Nut für die Klaue des Maschinenwellenendstücks angeordnet. Unter der Drehmomentübertragung wird insbesondere die Übertragung eines Torsionsmoments von der Maschinenwelle an der Geberwelle verstanden.

Vorteilhafterweise ist die Klaue des Maschinenwellenendabschnittes direkt in das Ende der Maschinenwelle eingearbeitet und/oder die Klaue des Geberwellenendabschnittes direkt in das Ende der Geberwelle eingearbeitet.

Es wird darauf hingewiesen, dass ein Vertauschen der Greifelemente als äquivalente Lösung einer Kupplung der betroffenen Elemente angesehen wird; d.h. das Drehmomentübertragungselement ist mit Klauen ausgebildet und die Endabschnitte weisen entsprechende Nuten auf. Zudem ist es vorstellbar, dass die Kuppelung des Drehmomentübertragungselements durch Stifte und Löcher realisiert wird.

In einer weiteren Ausführungsform der Erfindung weist das Drehmomentübertragungselement an seinen Stirnseiten weitere Nuten auf. Auf diese Weise kann ein Winkelversatz und/oder Radialversatz der Maschinenwelle und/oder Geberwelle durch Verformung des Drehmomentübertragungselements optimal ausgeglichen werden. Eine Verformung des Drehmomentübertragungselements kann daher leichter stattfinden, da es im Bereich einer Nut zu keiner Stauchung des Materials, des Drehmomentübertragungselements, kommt.

In einer weiteren Ausführungsform der Erfindung ist die Steifigkeit des Drehmomentübertragungselements hinsichtlich der Torsionskonstante, der Querkraft und/oder des Biegemoments vorzugsweise über die Dicke des Materials und/oder die Länge der Schenkel und/oder der Materialbeschaffenheit des Drehmomentübertragungselements einstellbar.

Zur Erhöhung der Lebensdauer und Beeinflussung der Steifigkeit des Drehmomentübertragungselements werden vorzugsweise entsprechend modifizierte Kunststoffe zum Einsatz gebracht. Besonders geeignet sind dabei Thermoplaste vorzugsweise mit Kohlefasern oder Glasfasern versehen, um eine Erhöhung der Steifigkeit und um eine Reduzierung bzw. Stabilisierung des thermischen Ausdehnungskoeffizienten zu erhalten.

Neben der Materialbeschaffenheit des Drehmomentübertragungselements kann zudem über die Schenkeltiefe der Nut bzw. die Materialdicke des Drehmomentübertragungselements die Belastbarkeit hinsichtlich des Torsionsmoments der Maschinenwelle und/oder des Biegemoments, welches durch einen Winkelversatz der Wellen hervorgerufen wird, und/oder der Querkraft, welche durch einen Radialversatz der Wellen hervorgerufen wird, eingestellt werden.

In einer weiteren Ausführungsform der Erfindung ist durch Überschreiten eines Schwellwertes eines radialen Versatzes zwischen der Maschinenwelle und der Geberwelle der spielfrei Kraftschluss des Geberwellenendstücks und/oder des Maschinenwellenendstücks mit dem Drehmomentübertragungselement aufhebbar und somit kann das Drehmomentübertragungselement nach dem Prinzip der Oldham-Kupplung gleiten.

Hierbei ist es vorteilhaft, wenn der Schwellwert derart ausgelegt ist, dass vor Eintritt in den plastischen Bereich der Verformung des Drehmomentübertragungselements der Kraftschluss aufgehoben wird. Zur Realisierung der Kupplung nach dem Oldham-Prinzip sollte beim Drehmomentübertragungselemente die Nut für die Klaue des Maschinenwellenendstücks senkrecht zur Nut der Klaue des Geberwellenendstücks stehen.

In einer weiteren Ausführungsform der Erfindung ist das Drehmomentübertragungselement durch Formschluss und/oder Stoffschluss mit dem Geberwellenendstück und/oder dem Maschinenwellenendstück spielfrei verbunden.

Das Drehmomentübertragungselement kann durch einen Kraftschluss spielfrei verbunden werden. Dies wird vorzugsweise mit einer Presspassung bzw. eine Übermaßpassung realisiert.

Alternativ kann jedoch die Verbindung zwischen den Klauen des Maschinenwellenendabschnitts und/oder des Geberwellenendabschnitts mit Formschluss und/oder Stoffschluss realisiert werden. Hier ist es vorteilhaft, wenn die Passung bzw. die Fläche zwischen den Klauen der Endabschnitte und den Nuten des Drehmomentübertragungselements optimal ausgenutzt werden.

In einer weiteren Ausführungsform der Erfindung ist eine elektrische Antriebseinheit mit einer Wellenkupplung nach einer der vorhergehenden Ausführungsformen, der elektrischen Maschine und dem Geber verbunden.

Die Erfindung ist nicht auf Wellenkupplungen mit nur einem Drehmomentübertragungselement begrenzt, es sind ebenso mehrere hintereinander angeordnete und ineinander greifende Drehmomentübertragungselemente axial vorstellbar. Dabei ist der Übergang zu den jeweiligen Wellenenden erfindungsgemäß ausgestattet.

Im Folgenden wird die Erfindung anhand der in den Figuren dargestellten Ausführungsbeispiele näher beschrieben und erläutert. Es zeigen:
- FIG 1: eine Ausgestaltung einer Wellenkupplung zur Ankupplung einer Maschinenwelle an eine Geberwelle,
- FIG 2: eine Ausgestaltung einer Wellenkupplung mit einem Drehmomentübertragungselement,
- FIG 3: eine Ausgestaltung eines Drehmomentübertragungsele- ments als Stanzbiegeteil,
- FIG 4: einen schematischen Aufbau einer elektrischen An- triebseinheit mit einer Wellenkupplung,
- FIG 5: ein schematischer Aufbau zweier Wellen zur Erläuterung des radialen Versatzes,
- FIG 6: ein schematischer Aufbau zweier Wellen zur Erläuterung eines Winkelversatzes und
- FIG 7: ein schematischer Aufbau einer aus dem Stand der Tech- nik bekannten Oldham-Kupplung.

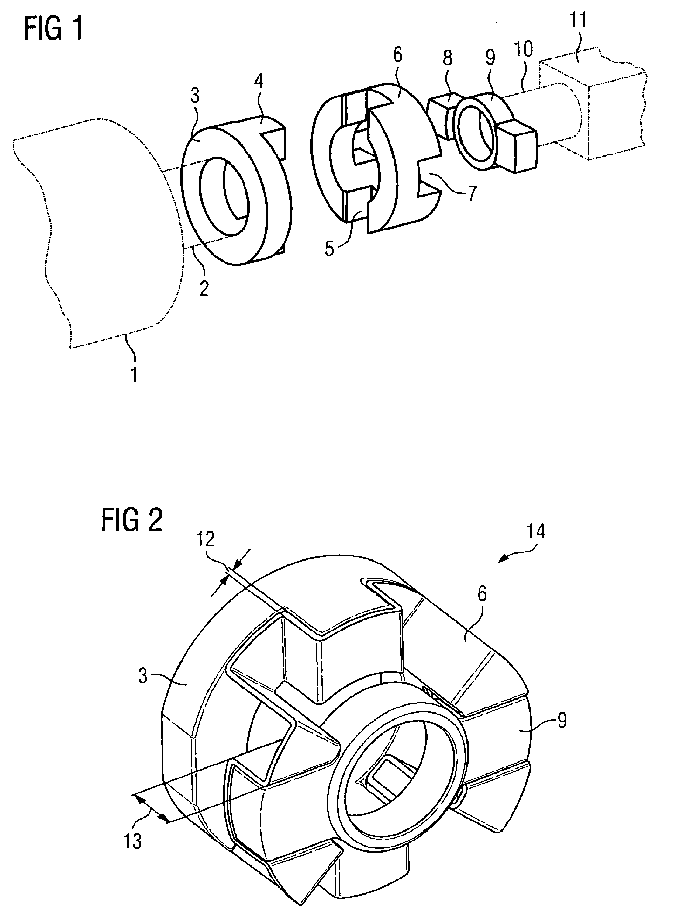

FIG 1 zeigt eine Ausgestaltung einer Wellenkupplung zur Ankupplung einer Maschinenwelle 2 an eine Geberwelle 10. Hierbei ist eine elektrische Maschine 1 mit einer Maschinenwelle 2 über ein Drehmomentübertragungselement 6 mit einer Geberwelle 10 eines Gebers 11 verbunden. Die Wellenkupplung umfasst ein Maschinenwellenendstück 3 ein Drehmomentübertragungselement 6 und ein Geberwellenendstück 9.

Um, wie erwünscht, ein Torsionsmoment der rotierenden Maschinenwelle 2 an die Geberwelle 10 zu übertragen bzw. das Torsionsmoment an der Maschinenwelle 2 abzugreifen ist die Maschinenwelle 2 mit einem Maschinenwellenendstück 3, welches eine erste Klaue 4 aufweist und die Geberwelle 10 mit einem Geberwellenendstück 9, welches eine zweite Klaue 8 aufweist, ausgebildet. Das Maschinenwellenendstück 3 und das Geberwellenendstück 9 werden mit dem Drehmomentübertragungselement 6 gekoppelt. Hierbei wird die erste Klaue 4 des Maschinenwellenendstücks 3 spielfrei mit einer ersten Nut 5 des Drehmomentübertragungselements 6 gekoppelt. Dementsprechend wird die zweite Klaue 8 des Geberwellenendstücks 9 mit einer zweiten Nut 7 des Drehmomentübertragungselements 6 gekoppelt. Die Koppelung findet vorzugsweise mittels Kraftschluss bzw. Pressschluss statt. Hierbei weisen die Klauen 4, 8 zu den Nuten 5, 7 des Drehmomentübertragungselements ein Übermaß auf. Alternativ kann das Geberwellenendstück 9 und/oder das Maschinenwellenendstück 3 mittels Formschluss und/oder Stoffschluss mit dem Drehmomentübertragungselement 6 verbunden werden.

Das Drehmomentübertragungselement 6 ist derart ausgebildet, dass es einen Winkelversatz bzw. einen Radialversatz der Maschinenwelle 2 zur Geberwelle 10 durch Deformation der eigenen Struktur kompensiert und somit keine bzw. stark reduzierte Querkräfte an die Maschinenwelle 2 bzw. Geberwelle 10 weitergibt.

Durch die spielfreie Koppelung des Geberwellenendstückes 9 und des Maschinenwellenendstückes 3 mit dem Drehmomentübertragungselement 6 kann ein Torsionsmoment der Maschinenwelle 2 zeitnah und genau an die Geberwelle 10 und somit an den Geber 11 weitergegeben werden. Auf diese Weise können auch kleine Änderungen der Maschinenwelle 2 übertragen werden und ein vorteilhafter Abgleich hinsichtlich der Winkellage des Motorläufers bzw. des Drehzahlistwerts für die Drehzahlregelung stattfinden. Sofern es zu einem radialen Versatz und/oder Winkelversatz zwischen der Geberwelle 10 und der Maschinenwelle 2 kommt, so wird die daraus resultierende Querkraft, die sich bei den Lager der Geberwelle 10 bzw. bei den Lager der Maschinenwelle 2 niederschlagen würde, durch Deformation der Struktur des Drehmomentübertragungselements 6 ausgeglichen. Die Deformation am Drehmomentübertragungselement 6 findet vorteilhafterweise im elastischen Bereich des Materials des Drehmomentübertragungselements 6 statt. Auf diese Weise werden die Lager der Maschinenwelle 2 und insbesondere die Lager der Geberwelle 10 entlastet bzw. geschont. Hierdurch wird eine enorme Verlängerung der Lebensdauer der üblicherweise verschleißanfälligen Lager erreicht.

FIG 2 zeigt eine Ausgestaltung der Wellenkupplung 14 mit dem Drehmomentübertragungselement 6. Hierbei ist das Maschinenwellenendstück 3 und das Geberwellenendstück 9 spielfrei mit einem Drehmomentübertragungselement 6 gekoppelt. Das Drehmomentübertragungselement 6 weist eine bestimmte Materialdicke 12 und Schenkellänge 13 auf. Über die Schenkellänge 13 wird die maximale Tiefe der Nut des Drehmomentübertragungselements 6 vorgegeben. Anhand der Materialdicke 12 und der Schenkellänge 13 kann die Steifigkeit des Drehmomentübertragungselements 6 gesteuert bzw. beeinflusst werden. Dies kann zudem über die Materialwahl (z.B. Kunststoff, Metall, etc.) des Drehmomentübertragungselements 6 erfolgen. Vorteilhafterweise wird das Drehmomentübertragungselement 6 aus Metall als Stanzbiegeteil gefertigt. Die vollständige Ausführung aus Metall hat den Vorteil, dass unter Temperatureinfluss, z.B. in Elektromotoren, eine konstante Steifigkeit beibehalten werden kann. Zudem kann eine preiswerte Fertigung des Drehmomentübertragungselements 6 erfolgen.

Über die Kombination der Materialdicke 12 der Schenkellänge 13 und der Materialwahl kann somit eine optimale Anpassung hinsichtlich der erwünschten Steifigkeit des Drehmomentübertragungselements 6 erfolgen.

In der Metallausführung kann z.B. zur Vermeidung einer Resonanzüberhöhung eine aufvulkanisierte Gummiversteifung bei dem Drehmomentübertragungselement 6 angebracht werden.

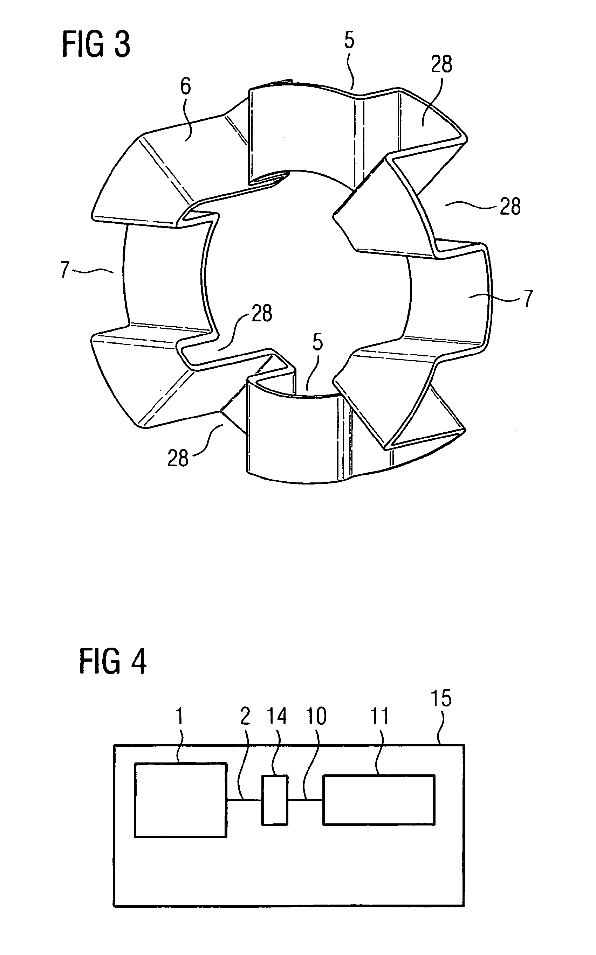

FIG 3 zeigt eine Ausgestaltung des Drehmomentübertragungselements 6 als Stanzbiegeteil. Dieses Drehmomentübertragungselement 6 ist eine spezielle Ausgestaltung des unter Figur 2 beschriebenen Drehmomentübertragungselements 6 als Stanzbiegeteil. Bei diesem Drehmomentübertragungselement 6 sind neben der ersten Nut 5 und der zweiten Nut 7, welche für die Greifelemente vorgesehen sind, noch weiter Nuten 28 vorhanden. Diese weiteren Nuten 28 unterstützen die Deformation des Drehmomentübertragungselements 6 hinsichtlich eines auftretenden Winkelversatzes und/oder Radialversatzes, da in diesem Bereich kein Material vorherrscht und somit keine Stauchung des Materials erforderlich ist. Zudem kann auf diese Weise eine Materialeinsparung beim Drehmomentübertragungselement 6 erzielt werden.

FIG 4 zeigt einen schematischen Aufbau einer elektrischen Antriebseinheit 15 mit einer Wellenkupplung 14. Ein Geber 11 wird über die Wellenkupplung 14 an eine elektrische Maschine 1 angeschlossen. Dabei wird eine Maschinenwelle 2 der elektrischen Maschine 1 über die Wellenkupplung 14 mit einer Geberwelle 10 des Gebers 11 verbunden.

FIG 5 zeigt einen schematischen Aufbau zweier Wellen 32, 33 zur Erläuterung des radialen Versatzes. Hierbei weist eine erste Achse 31 einer ersten Welle 33 zu einer zweiten Achse 30 einer zweien Welle 32 einen Versatz mit einem Abstand "Z" auf. Werden beide Wellen 32, 33 mit einem starren Drehmomentübertragungselement verbunden, so wird bei Rotation der ersten Welle 33 und/oder der zweiten Welle 32 durch den Radialversatz bzw. den Versatz der ersten Achse 30 zur zweiten Achse 31 eine Querkraft im starren Drehmomentübertragungselement hervorgerufen. Diese Querkraft wird auf die Lager der ersten Welle 32 und/oder der zweiten Welle 33 weitergegeben.

FIG 6 zeigt einen schematischen Aufbau zweier Wellen 32, 33 zur Erläuterung eines Winkelversatzes. Hierbei weist eine erste Achse 31 einer ersten Welle 33 zu einer zweiten Achse 30 einer zweien Welle 32 einen Winkelversatz mit dem Winkel "α" auf. Werden beide Wellen 32, 33 mit einem starren Drehmomentübertragungselement verbunden, so wird bei Rotation der ersten Welle 33 und/oder der zweiten Welle 32 durch den Winkelversatz der ersten Achse 30 zur zweiten Achse 31 eine Biegemoment im starren Drehmomentübertragungselement hervorgerufen. Dieses Biegemoment wird bei einem starren Drehmomentübertragungselement als Querkraft auf die Lager der ersten Welle 32 und/oder der zweiten Welle 33 weitergegeben.

FIG 7 zeigt einen schematischen Aufbau einer aus dem Stand der Technik bekannten Oldham-Kupplung. Hierbei ist eine erste Nut 35 eines ersten Wellenendabschnittes 34 sowie eine zweite Nut 39 eines zweiten Wellenendabschnittes 40 hinsichtlich eines ersten Greifelements 36 und eines zweiten Greifelements 38 eines Drehmomentübertragungselements 37 mit einem Spiel ausgebildet, so dass bei einem radialen Versatz "K" das erste Greifelement 36 in der ersten Nut 35 gleiten kann und das zweite Greifelement 38 in der zweiten Nut 39 gleiten kann. Das erste Greifelement 36 sollte im Wesentlichen zu dem zweiten Greifelement 38 senkrecht ausgerichtet sein. Auf diese Weise wird bei Rotation einer Welle, welche mit dem ersten und/oder zweiten Wellenendabschnitt 34, 40 verbunden ist, ein Radialversatz durch hin und her Gleiten des Drehmomentübertragungselements 37 kompensiert. Nachteilig hierbei ist jedoch, dass durch das hin und her Gleiten ein starker mechanischer Verschleiß an dem ersten Greifelement 36 und dem zweiten Greifelement 38 sowie der ersten Nut 35 und der zweiten Nut 39 festzustellen ist. Liegt ein Winkelversatz an einer Oldham-Kupplung vor, so kann dieser nicht durch das Drehmomentübertragungselement 37 kompensiert werden und die Wellen des Wellenendabschnittes 34 und/oder zweiten Wellenendabschnittes 40 geben dies als Querkraft an die Lager der besagten Wellen weiter. Dies führt zu einem beschleunigten Verschleiß der Lager.

## Patentansprüche

1. Wellenkupplung (14) zur Ankopplung eines Gebers (11), der eine Geberwelle (10) aufweist, an eine elektrische Maschine (1), die eine Maschinenwelle (2) aufweist, wobei die Wellenkupplung (14) umfasst:
- ein mit der Geberwelle (10) koppelbares Geberwellenendstück (9),
- ein mit der Maschinenwelle (2) koppelbares Maschinenwellenendstück (3) und
- ein Drehmomentübertragungselement (6),
wobei zur Kopplung der Geberwelle (10) mit der Maschinenwelle (2) das Geberwellenendstück (9)- gegenüberliegend zum Maschinenwellenendstück (3) angeordnet ist und das Drehmomentübertragungselement (6) zwischen dem Geberwellenendstück (9) und dem Maschinenwellenendstück (3) angeordnet ist, wobei das Drehmomentübertragungselement (6) mit dem Geberwellenendstück (9) und dem Maschinenwellenendstück (3) spielfrei koppelbar ist,
**dadurch gekennzeichnet, dass** das Drehmomentübertragungselement (6) eine derartige Steifigkeit aufweist, dass durch einen radialen Versatz und/oder Winkelversatz der Maschinenwelle (2) und/oder Geberwelle (10) hervorgerufene Querkräfte und/oder Biegemomente durch Deformation des Drehmomentübertragungselements (6) im Vergleich zu einer starren Kupplungsanordnung reduziert werden.

2. Wellenkupplung (14) nach Anspruch 1,
wobei das Drehmomentübertragungselement (6) als Biegeteil, insbesondere Stanzbiegeteil, ausgebildet ist.

3. Wellenkupplung (14) nach Anspruch 1,
wobei das Drehmomentübertragungselement (6) aus einem elastischen Kunststoff ausgebildet ist.

4. Wellenkupplung (14) nach einem der vorhergehenden Ansprüche,
wobei das Drehmomentübertragungselement (6) einstückig ausgeführt ist.

5. Wellenkupplung (14) nach einem der vorhergehenden Ansprüche,
wobei das Drehmomentübertragungselement (6) an den Stirnseiten, deren Flächennormale im Wesentlichen parallel zur Achse der Geberwelle (10) und/oder Maschinenwelle (2) gerichtet sind, wenn das Drehmomentübertragungselement (6) mit den besagten Wellen gekoppelt ist, jeweils eine durch seinen Mittelpunkt verlaufende Quernut (5, 7) aufweist, wobei das Maschinenwellenendstück (3) und das Geberwellenendstück (9) jeweils mindestens ein klauenartiges Element (4, 8) aufweisen, so dass im zusammengebauten Zustand das Drehmomentübertragungselement (6) mit dem Maschinenwellenendstück (3) und dem Geberwellenendstück (9) spielfrei ineinandergreifen und somit eine Drehmomentübertragung von der Maschinenwelle(2) an die Geberwelle (10) stattfindet.

6. Wellenkupplung (14) nach einem der vorhergehenden Ansprüche,
wobei das Drehmomentübertragungselement (6) an seinen Stirnseiten weitere Nuten (28) aufweist.

7. Wellenkupplung (14) nach einem der vorhergehenden Ansprüche,
wobei die Steifigkeit des Drehmomentübertragungselements (6) hinsichtlich der Torsionskonstante, der Querkraft und/oder des Biegemoments über die Dicke des Materials (12) und/oder die Länge der Schenkel (13) und/oder der Materialbeschaffenheit des Drehmomentübertragungselements (6) einstellbar ist.

8. Wellenkupplung (14) nach einem der vorhergehenden Ansprüche,
wobei durch Überschreiten eines Schwellwertes eines radialen Versatzes zwischen der Maschinenwelle (2) und der Geberwelle (10) der spielfrei Kraftschluss des Geberwellenendstücks (9) und/oder des Maschinenwellenendstücks (3) mit dem Drehmomentübertragungselement (6) aufhebbar ist und somit das Drehmomentübertragungselement (6) nach dem Prinzip der Oldham Kupplung gleiten kann.

9. Wellenkupplung (14) nach einem der vorhergehenden Ansprüche,
wobei das Drehmomentübertragungselement (6) durch Formschluss und/oder Stoffschluss mit dem Geberwellenendstück (9) und/oder dem Maschinenwellenendstück (3) verbunden ist.

10. Elektrische Antriebseinheit (15) mit einer Wellenkupplung (14) nach einem der vorhergehenden Ansprüche, der elektrischen Maschine (1) und dem Geber (11).

11. Verfahren zur Ankopplung eines Gebers (11), der eine Geberwelle (10) aufweist, an eine elektrische Maschine (1), die eine Maschinenwelle (2) aufweist, mit folgenden Verfahrensschritten:
- Kopplung eines Geberwellenendstückes (9) mit der Geberwelle (10),
- Kopplung eines Maschinenwellenendstück (3) mit der Maschinenwelle (2),
- spielfreies koppeln des Geberwellenendstückes (9) und des Maschinenwellenendstück (3) mit einem Drehmomentübertragungselement (6) welches eine derartige Steifigkeit aufweist, dass durch einen radialen Versatz und/oder Winkelversatz der Maschinenwelle (2) und/oder Geberwelle (10) hervorgerufene Querkräfte und/oder Biegemomente durch Deformation des Drehmomentübertragungselements (6) im Vergleich zu einer starren Kupplungsanordnung reduziert.

12. Verfahren nach Anspruch 11,
wobei das Drehmomentübertragungselement (6) aus einem Biegeteil, vorzugsweise Stanzbiegeteil, besteht.

13. Verfahren nach Anspruch 11,
wobei das Drehmomentübertragungselement (6) aus einem elastischen Kunststoff besteht.

14. Verfahren nach Anspruch 11 bis 13,
wobei das Drehmomentübertragungselement (6) einstückig ausgebildet ist.

15. Verfahren nach Anspruch 11 bis 14,
wobei das Drehmomentübertragungselement (6) an den Stirnseiten, deren Flächennormale im wesentlichen parallel zur Achse der Geberwelle und/oder Maschinenwelle (2) gerichtet sind, wenn das Drehmomentübertragungselement (6) mit den besagten Wellen gekoppelt ist, jeweils eine durch seinen Mittelpunkt verlaufende Quernut (5, 7) aufweist und das Maschinenwellenendstück (3) und das Geberwellenendstück (9) mindestens ein klauenartiges Element (4, 8) aufweist, so dass im zusammengebauten Zustand das Drehmomentübertragungselement (6) mit dem Maschinenwellenendstück (3) und dem Geberwellenendstück (9) spielfrei ineinandergreifen und somit eine Drehmomentübertragung von der Maschinenwelle(2) an die Geberwelle (10) stattfindet.

16. Verfahren nach Anspruch 11 bis 15,
wobei das Drehmomentübertragungselement (6) an seinen Stirnseiten weitere Quernuten (5, 7) aufweist.

17. Verfahren nach Anspruch 11 bis 16,
wobei die Steifigkeit des Drehmomentübertragungselements (6) hinsichtlich der Torsionskonstante, der Querkraft und/oder des Biegemoments über die Dicke des Materials (12) und/oder der Länge der Schenkel (13) und/oder der Materialbeschaffenheit des Drehmomentübertragungselements (6) eingestellt wird.

18. Verfahren nach Anspruch 11 bis 17,
wobei der spielfreie Kraftschluss derart eingestellt wird, dass durch Überschreiten eines Schwellwertes eines radialen Versatzes zwischen der Maschinenwelle (2) und der Geberwelle (10) der spielfreie Kraftschluss des Geberwellenendstücks (9) und/oder des Maschinenwellenendstücks (3) mit dem Drehmomentübertragungselement (6) aufgehoben wird und somit das Drehmomentübertragungselement (6) nach dem Prinzip der Oldham Kupplung gleitet.

19. Verfahren nach Anspruch 11 bis 18,
wobei das Drehmomentübertragungselement (6) durch Formschluss oder Stoffschluss mit dem Geberwellenendstück (9), und/oder dem Maschinenwellenendstück (3) verbunden wird.

## Claims

1. Shaft coupling (14) for coupling a pick-up (11), which has a feed shaft (10), to an electric machine (1) which has a machine shaft (2), the shaft coupling (14) comprising:
- a feed shaft end piece (9) which can be coupled to the feed shaft (10),
- a machine shaft end piece (3) which can be coupled to the machine shaft (2) and
- a torque transmission element (6),
the feed shaft end piece (9) being arranged opposite the machine shaft end piece (3) for coupling the feed shaft (10) to the machine shaft (2) and the torque transmission element (6) being arranged between the feed shaft end piece (9) and the machine shaft end piece (3), it being possible for the torque transmission element (6) to be coupled clearance-free to the feed shaft end piece (9) and the machine shaft end piece (3),
**characterised in that**
the torque transmission element (6) has a rigidity such that transverse forces and/or bending torques that are produced by a radial displacement and/or angular misalignment of the machine shaft (2) and/or feed shaft (10) are reduced by deformation of the torque transmission element (6) in comparison to a rigid coupling arrangement.

2. Shaft coupling (14) according to claim 1,
the torque transmission element (6) being formed as a bending part, in particular a punched bending part.

3. Shaft coupling (14) according to claim 1,
the torque transmission element (6) being formed from a resilient plastic.

4. Shaft coupling (14) according to one of the preceding claims,
the torque transmission element (6) being embodied in one piece.

5. Shaft coupling (14) according to one of the preceding claims,
the torque transmission element (6) having a transverse groove (5, 7) running through its centre point in each case on the end faces whose surface normals are oriented essentially parallel to the axis of the feed shaft (10) and/or of the machine shaft (2) if the torque transmission element (6) is coupled to the said shafts, the machine shaft end piece (3) and the feed shaft end piece (9) each having at least one claw-like element (4, 8), so that in the assembled state the torque transmission element (6) engages clearance-free with the machine shaft end piece (3) and the feed shaft end piece (9) and thus a transmission of torque is effected from the machine shaft (2) to the feed shaft (10).

6. Shaft coupling (14) according to one of the preceding claims,
the torque transmission element (6) having further grooves (28) on its end faces.

7. Shaft coupling (14) according to one of the preceding claims,
the rigidity of the torque transmission element (6) being adjustable in respect of the torsion constant, the transverse force and/or the bending torque by means of the thickness of the material (12) and/or the length of the limb (13) and/or the material property of the torque transmission element (6).

8. Shaft coupling (14) according to one of the preceding claims,
it being possible to nullify the clearance-free non-positive connection of the feed shaft end piece (9) and/or of the machine shaft end piece (3) with the torque transmission element (6) by exceeding a threshold value of a radial displacement between the machine shaft (2) and the feed shaft (10) and it thus being possible for the torque transmission element (6) to slide in accordance with the principle of the Oldham coupling.

9. Shaft coupling (14) according to one of the preceding claims,
the torque transmission element (6) being connected by positive connection and/or material bonding to the feed shaft end piece (9) and/or the machine shaft end piece (3).

10. Electric drive unit (15) having a shaft coupling (14) according to one of the preceding claims, the electric machine (1) and the pick-up (11).

11. Method for coupling a pick-up (11), which has a feed shaft (10), to an electric machine (1) which has a machine shaft (2), having the following method steps:
- coupling a feed shaft end piece (9) to the feed shaft (10),
- coupling a machine shaft end piece (3) to the machine shaft (2)
- clearance-free coupling of the feed shaft end piece (9) and the machine shaft end piece (3) to a torque transmission element (6) which has a rigidity such that transverse forces and/or bending torques that are produced by a radial displacement and/or angular misalignment of the machine shaft (2) and/or the feed shaft (10) are reduced by deformation of the torque transmission element (6) in comparison to a rigid coupling arrangement.

12. Method according to claim 11,
the torque transmission element (6) consisting of a bending part, preferably a punched bending part.

13. Method according to claim 11,
the torque transmission element (6) consisting of a resilient plastic.

14. Method according to claim 11 to 13,
the torque transmission element (6) being embodied in one piece.

15. Method according to claim 11 to 14,
the torque transmission element (6) having a transverse groove (5, 7) running through its centre point in each case on the end faces whose surface normals are oriented essentially parallel to the axis of the feed shaft (10) and/or of the machine shaft (2) if the torque transmission element (6) is coupled to the said shafts, and the machine shaft end piece (3) and the feed shaft end piece (9) each having at least one claw-like element (4, 8), so that in the assembled state the torque transmission element (6) engages clearance-free with the machine shaft end piece (3) and the feed shaft end piece (9) and thus a transmission of torque is effected from the machine shaft (2) to the feed shaft (10).

16. Method according to claim 11 to 15,
the torque transmission element (6) having further transverse grooves (5, 7) on its end faces.

17. Method according to claim 11 to 16,
the rigidity of the torque transmission element (6) being adjustable in respect of the torsion constant, the transverse force and/or the bending torque by means of the thickness of the material (12) and/or the length of the limb (13) and/or the material property of the torque transmission element (6).

18. Method according to claim 11 to 17,
the clearance-free non-positive connection being set such that by exceeding a threshold value of a radial displacement between the machine shaft (2) and the feed shaft (10) the clearance-free non-positive connection of the feed shaft end piece (9) and/or of the machine shaft end piece (3) with the torque transmission element (6) is nullified and thus the torque transmission element (6) slides in accordance with the principle of the Oldham coupling.

19. Method according to claim 11 to 18,
the torque transmission element (6) being connected by positive connection or material bonding to the feed shaft end piece (9) and/or the machine shaft end piece (3).

## Revendications

1. Accouplement ( 14 ) d'arbre pour l'accouplement d'un capteur ( 11 qui comporte un arbre ( 10 ) de capteur, à une machine ( 1 ) électrique, qui comporte un arbre ( 2 ) de machine, l'accouplement ( 14 ) d'arbre comprenant :
- une pièce ( 9 ) de bout d'arbre de capteur pouvant être couplée à l'arbre ( 10 ) du capteur,
- une pièce ( 13 ) de bout d'arbre de machine pouvant être couplée à l'arbre ( 2 ) de la machine et
- un élément ( 6 ) de transmission du couple,
dans lequel, pour l'accouplement de l'arbre ( 10 ) du capteur à l'arbre ( 2 ) de la machine la pièce ( 9 ) de bout d'arbre du capteur est disposée en face de la pièce ( 3 ) de bout d'arbre de machine et l'élément ( 6 ) de transmission de couple est disposée entre la pièce ( 9 ) de bout d'arbre de capteur et la pièce ( 3 ) de bout d'arbre de machine, l'élément ( 6 ) de transmission de couple pouvant être couplé sans jeu à la pièce ( 9 ) de bout d'arbre du capteur et à la pièce ( 3 ) de bout d'arbre de la machine,
**caractérisé en ce que**
l'élément ( 6 ) de transmission de couple a une raideur telle que des forces transversales provoquées par un déplacement radial et/ou par un déplacement angulaire de l'arbre ( 2 ) de la machine et/ou de l'arbre ( 10 ) du capteur et/ou des couples de flexion provoqués par une déformation de l'élément ( 6 ) de transmission de couple sont réduits par rapport à un agencement d'accouplement rigide.

2. Accouplement ( 14 ) d'arbre suivant la revendication 1,
dans lequel l'élément ( 6 ) de transmission de couple est constitué sous la forme d'une pièce pliée, notamment d'une pièce pliée et estampée.

3. Accouplement ( 14 ) d'arbre suivant la revendication 1,
dans lequel l'élément ( 6 ) de transmission de couple est en une matière plastique élastique.

4. Accouplement ( 14 ) d'arbre suivant l'une des revendications précédentes,
dans lequel l'élément ( 6 ) de transmission du couple est d'une seule pièce.

5. Accouplement ( 14 ) d'arbre suivant l'une des revendications précédentes,
dans lequel l'élément ( 6 ) de transmission de couple comporte sur les côtés frontaux dont les normales sont dirigées sensiblement parallèlement à l'axe de l'arbre ( 10 ) du capteur et/ou à l'arbre ( 2 ) de la machine lorsque l'élément ( 6 ) de transmission de couple est couplé auxdits arbres, respectivement une rainure ( 5, 7 ) transversale passant par son centre, la pièce ( 3 ) de bout d'arbre de la machine et la pièce ( 9 ) de bout d'arbre du capteur ayant respectivement au moins un élément ( 4, 8 ) de type à griffe de sorte qu'à l'état assemblé, l'élément ( 6 ) de transmission de couple s'interpénètre sans jeu avec la pièce ( 3 ) de bout de l'arbre de la machine et avec la pièce ( 9 ) de bout d'arbre du capteur et qu'a lieu ainsi une transmission de couple de l'arbre ( 2 ) de la machine à l'arbre ( 10 ) du capteur.

6. Accouplement ( 14 ) d'arbre suivant l'une des revendications précédentes,
dans lequel l'élément ( 6 ) de transmission de couple a d'autres rainures ( 28 ) sur ses côtés frontaux.

7. Accouplement ( 14 ) d'arbre suivant l'une des revendications précédentes,
dans lequel la raideur de l'élément ( 6 ) de transmission de couple est réglable du point de vue de la constante de torsion, de la force transversale et/ou du couple de flexion sur l'épaisseur du matériau ( 12 ) et/ou de la longueur des branches ( 13 ) et/ou des propriétés de matériau de l'élément ( 6 ) de transmission.

8. Accouplement ( 14 ) d'arbre suivant l'une des revendications précédentes,
dans lequel, par dépassement d'une valeur de seuil d'un déplacement radial entre l'arbre ( 2 ) de la machine et l'arbre ( 10 ) du capteur, la liaison à force sans jeu de la pièce ( 9 ) de bout d'arbre du capteur et/ou de la pièce ( 3 ) de bout d'arbre de la machine avec l'élément ( 9 ) de transmission de couple peut être levée et ainsi l'élément ( 6 ) de transmission de couple peut glisser suivant le principe de l'accouplement d'Oldham.

9. Accouplement ( 14 ) d'arbre suivant l'une des revendications précédentes,
dans lequel l'élément ( 6 ) de transmission de couple est relié à la pièce ( 9 ) de bout d'arbre du capteur et/ou à la pièce ( 3 ) de bout d'arbre de la machine par complémentarité de forme et/ou par complémentarité de matière.

10. Unité ( 15 ) d'entraînement électrique comprenant un accouplement ( 14 ) d'arbre suivant l'une des revendications précédentes, la machine ( 1 ) électrique et le capteur ( 11 ).

11. Procédé d'accouplement d'un capteur ( 11 ) qui a un arbre ( 10 ) du capteur, à une machine ( 1 ) électrique, qui a un arbre ( 2 ) de machine, comprenant les stades de procédé suivantes :
- on accouple une pièce ( 9 ) de bout d'arbre du capteur à l'arbre ( 10 ) du capteur,
- on accouple une pièce ( 3 ) de bout d'arbre de la machine à l'arbre ( 2 ) de la machine,
- on accouple sans jeu la pièce ( 9 ) de bout d'arbre du capteur et la pièce ( 3 ) de bout d'arbre de la machine à un élément ( 6 ) de transmission de couple, qui a une raideur telle que des forces transversales provoquées par un déplacement radial et/ou par un déplacement angulaire de l'arbre ( 2 ) de la machine et/ou de l'arbre ( 10 ) du capteur et/ou des couples de flexion provoqués par déformation de l'élément ( 6 ) de transmission de couple sont réduits par rapport à un agencement rigide.

12. Procédé suivant la revendication 11, dans lequel l'élément ( 6 ) de transmission de couple est constitué sous la forme d'une pièce pliée, notamment d'une pièce pliée et estampée.

13. Procédé suivant la revendication 11, dans lequel l'élément ( 6 ) de transmission de couple est en une matière plastique élastique.

14. Procédé suivant la revendication 11 à 13, dans lequel l'élément ( 6 ) de transmission du couple est d'une seule pièce.

15. Procédé suivant la revendication 11 à 14, dans lequel l'élément ( 6 ) de transmission de couple comporte sur les côtés frontaux dont les normales sont dirigées sensiblement parallèlement à l'axe de l'arbre ( 10 ) de capteur et/ou à l'arbre ( 2 ) de la machine lorsque l'élément ( 6 ) de transmission de couple est couplé auxdits arbres respectivement une rainure ( 5,7 ) transversale passant par son centre, la pièce ( 3 ) de bout d'arbre de la machine et la pièce ( 9 ) de bout d'arbre du capteur ayant respectivement au moins un élément ( 4, 8 ) de type à griffe de sorte qu'à l'état assemblé, l'élément ( 6 ) de transmission de couple s'interpénètre sans jeu avec la pièce ( 3 ) de bout de l'arbre de la machine et avec la pièce ( 9 ) de bout d'arbre du capteur et qu'a lieu ainsi une transmission de couple de l'arbre ( 2 ) de la machine à l'arbre ( 10 ) du capteur.

16. Procédé suivant la revendication 11 à 15, dans lequel l'élément ( 6 ) de transmission de couple a d'autres rainures ( 28 ) sur ses côtés frontaux.

17. Procédé suivant la revendication 11 à 16, dans lequel la raideur de l'élément ( 6 ) de transmission de couple est réglable du point de vue de la constante de torsion, de la force transversale et/ou du couple de flexion sur l'épaisseur du matériau ( 12 ) et/ou sur la longueur des branches ( 13 ) et/ou des propriétés de matériau de l'élément ( 6 ) de transmission.

18. Procédé suivant la revendication 11 à 17, dans lequel on règle la liaison par force sans jeu de manière à ce que, par dépassement d'une valeur de seuil d'un déplacement radial entre l'arbre ( 2 ) de la machine et l'arbre ( 10 ) du capteur, la liaison à force sans jeu de la pièce ( 9 ) de bout d'arbre du capteur et/ou de la pièce ( 3 ) de bout d'arbre de la machine avec l'élément ( 9 ) de transmission de couple puisse être levée et ainsi l'élément ( 6 ) de transmission de couple puisse glisser suivant le principe de l'accouplement d'Oldham.

19. Procédé suivant la revendication 11 à 18, dans lequel l'élément ( 6 ) de transmission de couple est relié à la pièce ( 9 ) de bout d'arbre du capteur et/ou à la pièce ( 3 ) de bout d'arbre de la machine par complémentarité de forme et/ou par complémentarité de matière.
